# FASCICULE DE BREVET EUROPEEN

(11) **EP 2 337 711 B1**
(45) Date de publication et mention de la délivrance du brevet: **20.03.2013**
(21) Numéro de dépôt: 09736995.3
(22) Date de dépôt: 22.10.2009
(51) Int. Cl.: B60K 15/04

(54) **VERROU D'ANTIVOL DE VEHICULE AUTOMOBILE**
DIEBSTAHLSCHUTZVERRIEGELUNG FÜR EIN KRAFTFAHRZEUG
ANTITHEFT LATCH FOR AN AUTOMOBILE

(30) Priorité: 23.10.2008 FR 0805886
(43) Date de publication de la demande: 29.06.2011
(73) Titulaire: Valeo Sécurité Habitacle, 94046 Créteil Cedex (FR)
(72) Inventeur: MALTAVERNE, Fréderic, F-94042 Creteil (FR); PERRIN, Christophe, F-94042 Creteil (FR)
(74) Mandataire: Larger, Solène
(86) Numéro de dépôt international: PCT/EP2009/063875
(87) Numéro de publication internationale: WO 2010/046433

(56) Documents cités:
- FR-A- 2 208 432
- FR-A- 2 884 271
- US-A- 2 480 026

## Description

L'invention concerne un verrou d'antivol, et plus particulièrement un moyen de maintien d'un verrou d'antivol de colonne de direction de véhicule automobile.

Généralement, un verrou d'antivol est disposé par l'intermédiaire de moyen de liaison, par exemple, dans un logement prévu dans un corps d'antivol de la colonne de direction d'un véhicule automobile.

Ce moyen de liaison, tel un pion rappelé par un ressort hélicoïdal dans le logement du corps d'antivol permet de garantir une tenue à l'arrachement, l'arrachement étant une action sur le verrou tendant à le sortir de son logement.

Afin de respecter les cadences de lignes de production et de faciliter le montage du verrou dans son corps d'antivol, il est connu de laisser un jeu entre ces deux pièces.

Néanmoins, la présence de ce jeu accentue les nuisances sonores liées aux vibrations et nécessite un élément antivibratoire.

Actuellement, il est serti par déformation de matière, un patin en caoutchouc.

Le document FR 2 208 432 divulgue un verrou d'antivol de véhicule automobile selon l'art antérieur.

La présente invention propose de palier aux inconvénients de l'art antérieur en réduisant le coût et les difficultés de montage liés à la suppression des jeux du verrou dans le corps d'antivol ainsi que le maintien en position et le rappel du système de liaison escamotable. Avantageusement, la présente invention permet d'améliorer le temps et la facilité d'assemblage/montage.

De plus, la présente invention propose un compromis optimal entre les conditions d'élasticité pour le maintien du verrou et le rattrapage de jeux dans son corps d'antivol, et la résistance à l'arrachement.

L'invention résout ce problème et, pour ce faire, propose un verrou d'antivol de véhicule automobile constitué d'un barillet et d'un stator, lequel verrou comprend au moins un moyen antivibratoire dudit verrou et au moins un moyen de rappel et de maintien en position d'un moyen de liaison escamotable dudit verrou dans son corps d'antivol, caractérisé en ce que ledit moyen antivibratoire et ledit moyen de rappel et de maintien en position forment une seule pièce. Plus précisément, ladite une seule pièce formant ledit moyen de rappel et de maintien en position est une lame élastique.

Plus particulièrement, ledit moyen de maintien se présente sous la forme d'une lame élastique.

D'autres caractéristiques et avantages de l'invention ressortiront clairement de la description qui en est donnée ci-dessous, à titre indicatif et nullement limitatif, de modes de réalisation faisant référence aux figures annexées ci-jointes sur lesquelles :
- les figures 1 et 2 représentent schématiquement en perspective un verrou, sans corps d'antivol correspondant, selon la présente invention ;
- la figure 3 est une vue en coupe longitudinale d'un verrou disposé dans un corps d'antivol selon la présente invention ;
- la figure 4 est une vue schématique en perspective d'un moyen de maintien selon l'invention.

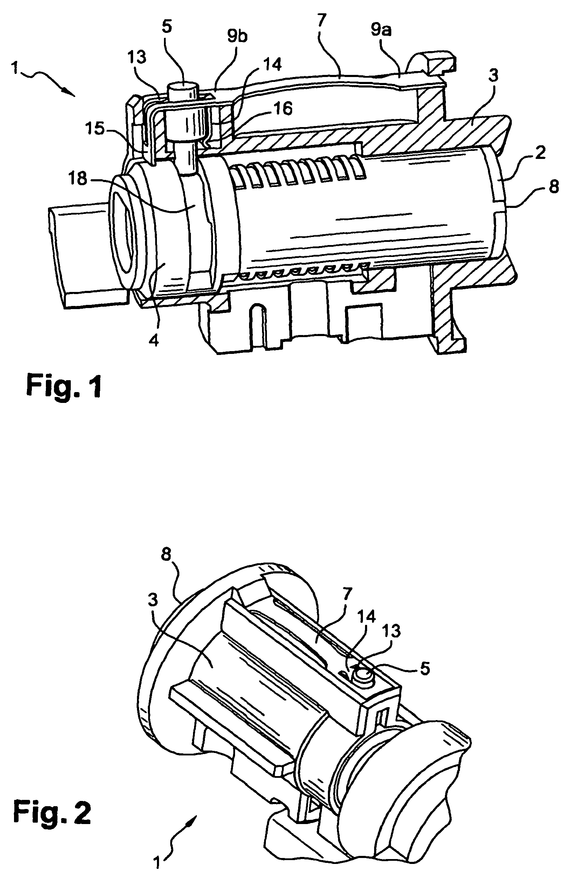

Les figures 1 et 2 représentent schématiquement en perspective un verrou, sans corps d'antivol correspondant, selon la présente invention.

Un verrou 1 comporte un barillet 2 et un stator 3. Le barillet 2 est constitué d'un rotor 4 et de paillettes non représentées mais de type connu en soi.

Le stator 3 comprend plusieurs logements notamment, celui du rotor 4 et celui d'un moyen de liaison escamotable 5 du verrou dans son corps d'antivol.

Plus précisément, le rotor 4, une fois introduit dans le stator 3, est ensuite inséré de manière complémentaire dans un corps d'antivol 6 d'un véhicule automobile, par exemple, grâce à un moyen de maintien 7.

Plus précisément, le corps d'antivol s'interface avec une colonne de direction d'un véhicule automobile. Le corps d'antivol a pour rôle de bloquer la rotation de la colonne de direction. Le verrou correspond à la partie codante permettant la transmission ou le blocage de la rotation de la colonne de direction vers le corps d'antivol.

Ledit moyen de liaison escamotable 5 se présente sous la forme d'un pion 5. Ce dernier permet de fixer le verrou dans le corps d'antivol 6, en effectuant des mouvements de translation permettant de traverser le corps d'antivol 6 jusqu'au rotor 4 et ainsi de faire résister ledit verrou à l'arrachement, par exemple.

De manière plus précise, le rotor 4 est introduit dans un logement prévu dans le stator 3 et vient en butée sur le fond de ce logement, laissant paraître une partie extrême portant une entrée de clé 8 dans un alésage pratiqué dans le fond dudit logement dudit stator.

Ledit moyen de maintien 7, selon la présente invention forme, d'une seule pièce, au moins un moyen antivibratoire et au moins un moyen de rappel et de maintien du moyen de liaison 5 dudit verrou dans son corps d'antivol, sous la forme d'une lame élastique comprenant une certaine configuration.

Plus précisément, ledit moyen de maintien 7 est sensiblement longitudinal et bombé par rapport à l'axe longitudinal du verrou.

De préférence, ledit moyen de maintien est bombé en son centre par rapport à l'axe longitudinal du verrou permettant ainsi de supprimer les jeux possibles entre le verrou et son logement.

Ledit moyen de maintien 7 est inséré sensiblement parallèlement à l'axe longitudinal du verrou dans une rainure prévue dans le stator 3.

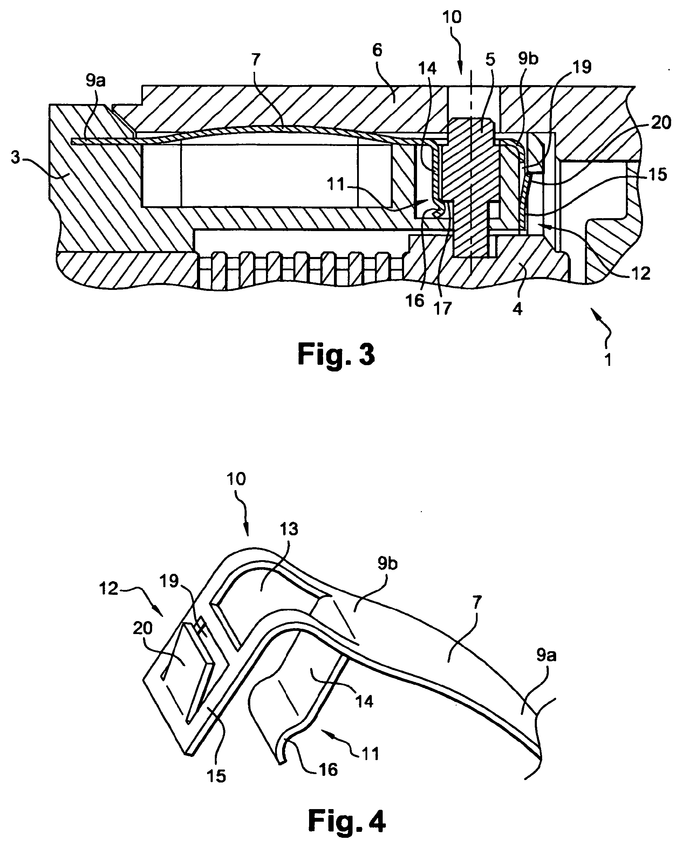

La figure 3 est une vue en coupe longitudinale d'un verrou disposé dans un corps d'antivol selon la présente invention.

Ledit moyen de maintien 7 est solidaire du stator 3 par son extrémité 9a dirigée vers le fond du logement et destinée à venir en butée contre une paroi transversale de butée longitudinale du stator par son autre extrémité 9b, dite de clippage. Cette paroi de butée est généralement constituée par la surface frontale d'une encoche longitudinale agencée dans le logement dudit stator.

L'extrémité 9a solidaire du stator 3 dudit moyen de maintien est insérée dans ledit stator dans un canal prévu à cet effet.

L'extrémité de clippage 9b dudit moyen de maintien comprend des découpes et des pliures.

En effet, ladite extrémité de clippage 9b comprend trois parties (10, 11 et 12) formant un U ouvert ou un U possédant un orifice à sa base.

De manière plus précise, il est ménagé dans l'extrémité de clippage 9b, un orifice 13, et deux parois perpendiculaires par rapport à l'axe principal dudit moyen de maintien et donc dudit verrou.

Autrement dit, l'extrémité 9b comprend un orifice 13 et au moins une première patte 14 plongeant dans cet orifice. Ledit orifice se prolonge par une partie terminale formant une deuxième patte 15 perpendiculaire audit axe dudit moyen de maintien.

La figure 4 est une vue schématique, en perspective, d'un moyen de maintien selon l'invention.

Plus précisément, la première partie 10 de l'extrémité 9b dudit moyen de maintien 6 forme un orifice 13 pour le passage du pion 5 afin qu'il puisse être inséré dans son logement prévu dans le stator 3.

La deuxième partie 11 de l'extrémité de clippage 9b forme une première patte parallèle 14 au logement du pion 5, et ce, de manière perpendiculaire audit axe longitudinal du verrou. Cette partie 11 forme en sa partie supérieure une partie du périmètre de l'orifice 13 dudit pion. Sa partie centrale se prolonge le long du logement du pion et du pion lui-même.

La deuxième partie 11 de l'extrémité de clippage 9b ou la première patte 14 forme une ondulation 16.

De préférence, la partie inférieure de ladite au moins première patte 14 forme une ondulation 16 permettant ainsi d'assurer le rappel et le maintien en position haute du pion de liaison 5.

Plus précisément, l'ondulation 16 vient appuyer par une pente latérale sur une arrête circonférentielle 17 du pion 5, repoussant ce dernier vers le haut par glissement de cette arrête sur la pente latérale en direction du rotor où le pion vient s'engager.

De manière alternative, il est prévu une deuxième patte 14 permettant de former une autre patte parallèle dans ledit logement du pion.

Favorablement, le rotor 4 possède un alésage 18 permettant l'escamotage du pion 5 d'une position accessoire à une position haute via une rampe (non illustrée mais de type connu en soi).

La position accessoire est une position du rotor 4 sur le corps de l'antivol de la colonne de direction du véhicule permettant une utilisation de tous les dispositifs annexes sans nécessairement tourner la clé jusqu'à la position démarrage du véhicule correspondant à un engagement total du pion 5 dans l'alésage 18 et la rampe dudit rotor prévus à cette fin.

La troisième partie 12 de l'extrémité de clippage 9b forme une partie de lame parallèle à la paroi de butée, et est perpendiculaire audit axe longitudinal du verrou, dite deuxième patte 15. Cette partie 12 forme en sa partie supérieure l'autre partie du périmètre de l'orifice 13 du pion 5 et assure une surface de contact plane d'une dimension non négligeable avec la paroi de butée et en conséquence le maintien de la lame, une tenue à l'arrachement importante ainsi qu'une retenue du verrou à l'encontre d'un effort de poussée à l'extérieur du logement.

La troisième partie 12 de l'extrémité de clippage 9b ou la deuxième patte 15 comprend une fente 19.

De préférence, la partie centrale de la deuxième patte 15 est pourvue d'une fente 19 permettant ainsi son clipsage avec le stator 3.

Ladite fente est apte à coopérer avec un élément complémentaire de clipsage sur le stator 4. La fente 19 peut former un évidement de matière et une languette 20.

De manière alternative, cette partie d'extrémité 12 dudit moyen de maintien peut être sous la forme de tout autre moyen d'attache de type connu en soi permettant de coopérer avec le stator 3.

De manière avantageuse, ladite extrémité de clippage 9b dudit moyen de maintien 7 est disposée dans la direction opposée à l'entrée 8 de clé du verrou 1.

L'assemblage du dispositif comporte les étapes suivantes :
i) mise en place du rotor 3 dans le stator 4,
ii) mise en place du pion 5 dans le stator 4,
iii) mise en place dudit moyen de maintien 7
   - insertion dans le stator d'une première extrémité 9a,
   - rotation autour de l'axe principal du point d'insertion dudit moyen de maintien,
   - clippage de l'extrémité de clippage 9b avec le stator 3.

Ainsi ledit moyen de maintien permet par son élasticité et sa configuration de supprimer les jeux existants, et donc les vibrations, entre le verrou et son corps d'antivol.

De plus, grâce à son extrémité de clippage, ledit moyen de maintien permet, d'une seule pièce, d'assurer un moyen de rappel et de maintien en position du moyen de liaison escamotable du verrou dans son corps d'antivol.

### LEGENDE

- 1: verrou
- 2: barillet
- 3: stator
- 4: rotor
- 5: pion
- 6: corps d'antivol
- 7: lame élastique
- 8: entrée de clé
- 9a: première extrémité de la lame élastique
- 9b: extrémité de clippage de la lame élastique
- 10: première partie de l'extrémité de clippage de la lame élastique
- 11: deuxième partie de l'extrémité de clippage de la lame élastique
- 12: troisième partie de l'extrémité de clippage de la lame élastique
- 13: orifice
- 14: première patte
- 15: deuxième patte
- 16: ondulation
- 17: arrête circonférentielle
- 18: alésage
- 19: fente
- 20: languette

## Revendications

1. Verrou (1) d'antivol de véhicule automobile constitué d'un barillet (2) et d'un stator (3), lequel verrou comprend au moins un moyen antivibratoire dudit verrou et au moins un moyen de rappel et de maintien en position d'un moyen de liaison (5) escamotable dudit verrou dans son corps d'antivol (6), **caractérisé en ce que** ledit moyen antivibratoire et ledit moyen de rappel et de maintien en position forment une seule pièce.

2. Verrou selon la revendication 1, **caractérisé en ce que** ladite une seule pièce formant ledit moyen antivibratoire et ledit moyen de rappel et de maintien en position est une lame élastique (7).

3. Verrou selon la revendication 1 ou 2, **caractérisé en ce que** ladite une seule pièce formant ledit moyen antivibratoire et ledit moyen de rappel et de maintien en position est sensiblement longitudinale et bombée par rapport à l'axe longitudinal dudit verrou.

4. Verrou selon la revendication 2 ou 3, **caractérisé en ce que** ladite lame (7) est disposée parallèlement à l'axe longitudinal du verrou et est solidaire du stator (3) par une première extrémité (9a) et vient en butée longitudinale contre une paroi dudit stator par son autre extrémité (9b), dite de clippage.

5. Verrou selon l'une des revendications 2 à 4, **caractérisé en ce que** ladite lame (7) comprend à son extrémité de clippage (9b) une forme de U ouvert.

6. Verrou selon la revendication précédente, **caractérisé en ce que** ladite extrémité de clippage (9b) comprend un orifice (13) et au moins une première patte (14) plongeant dans cet orifice.

7. Verrou selon la revendication précédente, **caractérisé en ce que** ledit orifice (13) se prolonge par une deuxième patte (15) perpendiculaire audit axe de ladite lame (7) formant sa partie terminale.

8. Verrou selon la revendication 6, **caractérisé en ce que** ladite première patte (14) est parallèle au logement du moyen de liaison (5) prévu dans ledit stator (3) et perpendiculaire audit axe longitudinal du verrou.

9. Verrou selon la revendication 6 ou 8, **caractérisé en ce que** ladite première patte (14) forme une ondulation (16).

10. verrou selon la revendication 7, **caractérisé en ce que** ladite deuxième patte (15) forme une partie de lame parallèle à la paroi de butée longitudinale dudit stator et perpendiculaire audit axe longitudinal du verrou.

11. Verrou selon la revendication 7 ou 10, **caractérisé en ce que** ladite deuxième patte (15) comprend une fente (19) permettant son clipsage avec ledit stator (3).

## Claims

1. Motor vehicle antitheft lock (1) consisting of a cylinder (2) and a stator (3), said lock comprising at least one antivibration means for said lock and at least one return and position-holding means for a retractable means (5) for connecting said lock into its antitheft body (6), **characterized in that** said antivibration means and said return and position-holding means form one piece.

2. Lock according to Claim 1, **characterized in that** said one piece forming said antivibration means and said return and position-holding means is an elastic tongue (7).

3. Lock according to Claim 1 or 2, **characterized in that** said one piece forming said antivibration means and said return and position-holding means is approximately longitudinal and bulges out with respect to the longitudinal axis of said lock.

4. Lock according to Claim 2 or 3, **characterized in that** said tongue (7) is arranged parallel to the longitudinal axis of the lock and is secured to the stator (3) at a first end (9a) and comes into longitudinal abutment against a wall of said stator at its other end (9b), known as the clip-fastening end.

5. Lock according to one of Claims 2 to 4, **characterized in that** said tongue (7) comprises an open U shape at its clip-fastening end (9b).

6. Lock according to the preceding claim, **characterized in that** said clip-fastening end (9b) comprises an orifice (13) and at least a first tab (14) that dips down into this orifice.

7. Lock according to the preceding claim, **characterized in that** said orifice (13) is extended by a second tab (15) perpendicular to said axis of said tongue (7) and forming its terminal part.

8. Lock according to Claim 6, **characterized in that** said first tab (14) is parallel to the housing of the connecting means (5) provided in said stator (3) and perpendicular to said longitudinal axis of the lock.

9. Lock according to Claim 6 or 8, **characterized in that** said first tab (14) forms a wave shape (16).

10. Lock according to Claim 7, **characterized in that** said second tab (15) forms a tongue part parallel to the longitudinal abutment wall of said stator and perpendicular to said longitudinal axis of the lock.

11. Lock according to Claim 7 or 10, **characterized in that** said second tab (15) comprises a slot (19) enabling it to be clip-fastened to said stator (3).

## Patentansprüche

1. Diebstahlsicherungsriegel (1) eines Kraftfahrzeugs, der aus einem Schließzylinder (2) und einem Stator (3) besteht, wobei der Riegel mindestens eine schwingungsdämmende Einrichtung des Riegels und mindestens eine Rückstell- und Stellungsbeibehaltungseinrichtung einer einziehbaren Verbindungseinrichtung (5) des Riegels in seinem Diebstahlsicherungsgehäuse (6) enthält, **dadurch gekennzeichnet, dass** die schwingungsdämmende Einrichtung und die Rückstell- und Stellungsbeibehaltungseinrichtung aus einem Stück bestehen.

2. Riegel nach Anspruch 1, **dadurch gekennzeichnet, dass** das eine Bauteil, das die schwingungsdämmende Einrichtung und die Rückstell- und Stellungsbeibehaltungseinrichtung formt, eine elastische Lamelle (7) ist.

3. Riegel nach Anspruch 1 oder 2, **dadurch gekennzeichnet, dass** das eine Bauteil, das die schwingungsdämmende Einrichtung und die Rückstell- und Stellungsbeibehaltungseinrichtung formt, im Wesentlichen längs verläuft und bezüglich der Längsachse des Riegels gewölbt ist.

4. Riegel nach Anspruch 2 oder 3, **dadurch gekennzeichnet, dass** die Lamelle (7) parallel zur Längsachse des Riegels angeordnet und über ein erstes Ende (9a) fest mit dem Stator (3) verbunden ist und über ihr anderes Ende (9b), Einschnappende genannt, gegen eine Wand des Stators in Längsanschlag kommt.

5. Riegel nach einem der Ansprüche 2 bis 4, **dadurch gekennzeichnet, dass** die Lamelle (7) an ihren Einschnappende (9b) die Form eines offenen U hat.

6. Riegel nach dem vorhergehenden Anspruch, **dadurch gekennzeichnet, dass** das Einschnappende (9b) eine Öffnung (13) und mindestens eine erste Lasche (14) enthält, die in diese Öffnung eintaucht.

7. Riegel nach dem vorhergehenden Anspruch, **dadurch gekennzeichnet, dass** die Öffnung (13) sich durch eine zweite Lasche (15) lotrecht zur Achse der Lamelle (7) verlängert, die ihren Endbereich formt.

8. Riegel nach Anspruch 6, **dadurch gekennzeichnet, dass** die erste Lasche (14) parallel zur im Stator (3) vorgesehenen Aufnahme der Verbindungseinrichtung (5) und lotrecht zur Längsachse des Riegels ist.

9. Riegel nach Anspruch 6 oder 8, **dadurch gekennzeichnet, dass** die erste Lasche (14) eine Wellenform (16) bildet.

10. Riegel nach Anspruch 7, **dadurch gekennzeichnet, dass** die zweite Lasche (15) einen Lamellenteil parallel zur Längsanschlagswand des Stators und lotrecht zur Längsachse des Riegels bildet.

11. Riegel nach Anspruch 7 oder 10, **dadurch gekennzeichnet, dass** die zweite Lasche (15) einen Schlitz (19) enthält, der ihr Einklinken mit dem Stator (3) erlaubt.
